# FASCICULE DE BREVET EUROPEEN

(11) **EP 3 575 224 B1**
(45) Date de publication et mention de la délivrance du brevet: **14.10.2020**
(21) Numéro de dépôt: 19174215.4
(22) Date de dépôt: 13.05.2019
(51) Int. Cl.: B64G 1/64, F42B 15/36

(54) **SYSTEME DE SEPARATION PONCTUEL ELECTROMECANIQUE**
ELEKTROMECHANISCHES PUNKTUELLES TRENNSYSTEM
PUNCTUAL ELECTROMECHANICAL SEPARATING SYSTEM

(30) Priorité: 31.05.2018 FR 1800534
(43) Date de publication de la demande: 04.12.2019
(73) Titulaire: ArianeGroup SAS, 75015 Paris (FR)
(72) Inventeur: ABENSUR, Thierry, 78300 Poissy (FR)
(74) Mandataire: Brevalex

(56) Documents cités:
- EP-B1- 0 791 139
- EP-B1- 1 250 539
- US-A- 4 187 759
- US-A- 5 221 171

## Description

### DOMAINE TECHNIQUE

La présente invention concerne un système de séparation ponctuel électromécanique.

### ÉTAT DE LA TECHNIQUE

Plus particulièrement, bien que non exclusivement, la présente invention peut s'appliquer à un lanceur (spatial) comprenant notamment une pluralité d'étages propulsifs largables successifs et une charge utile qui peut être agencée sous une coiffe. La charge utile peut être, par exemple, un satellite artificiel ou une sonde spatiale. Le décollage du lanceur est réalisé par l'allumage des étages propulsifs de manière successive. Une fois qu'un étage ne fournit plus de propulsion au lanceur par manque de combustible, il se sépare du lanceur, puis est largué de manière à ne pas interférer avec la trajectoire du lanceur pendant sa phase de vol. L'étage propulsif suivant prend le relais, jusqu'à ce que le lanceur atteigne l'altitude nécessaire pour le déploiement de la charge utile en orbite autour de la Terre ou dans l'espace interplanétaire. Au moment opportun, la coiffe puis la charge utile sont séparées du lanceur. En raison des contraintes aérospatiales, chaque séparation d'un élément constitutif du lanceur doit être extrêmement rapide.

Il existe plusieurs types de système de séparation de deux éléments, différenciables par leur façon de générer une force suffisante pour séparer les deux éléments.

Ainsi, des systèmes de séparation pyrotechniques, qui reposent sur la combustion d'une charge pyrotechnique, sont souvent employés dans les domaines de l'aéronautique et de l'aérospatiale car ils sont peu volumineux, légers et génèrent très rapidement une force importante. Cependant, l'assemblage de systèmes de séparation pyrotechniques engendre des contraintes de sécurité importantes en raison des risques de déclenchement intempestif de la charge pyrotechnique. Ces contraintes de sécurité génèrent des coûts d'assemblage importants.

On peut également employer des systèmes de séparation non pyrotechniques, qui peuvent être de type électrothermique, électromécanique ou électropneumatique. A titre d'illustration, on connaît, par un article intitulé « Design and Experimental Validation of Compact, Quick-Response Shape Memory Alloy Separation Device », publié dans « Journal of Mechanical Design », Vol 136, en janvier 2014, un dispositif de séparation entre vis d'assemblage et écrou segmenté.

On connaît également, par le document US 4 187 759 A, un système de séparation électromécanique comprenant des ensembles d'écrou de séparation éjectant des boulons combinés à des ensembles de collecteur de boulons. Au moins deux ensembles d'écrou de séparation avec leurs ensembles de collecteur de boulons respectifs sont reliés par un tube de sorte que, en cas de défaillance de l'initiateur de blocage d'un écrou de séparation, le tube transfère et redistribue le gaz généré entre les deux ensembles d'écrou de séparation pour assurer une redondance des performances.

Les contraintes de sécurité lors de l'assemblage de ce type de systèmes non pyrotechniques sont moindres. Cependant, ils sont généralement plus lourds et plus encombrants que des systèmes de séparation pyrotechniques et impliquent des temps de séparation beaucoup plus longs (de l'ordre de quelques centaines de millisecondes à plusieurs secondes).

### EXPOSÉ DE L'INVENTION

La présente invention a pour objet de remédier à ces inconvénients. Elle concerne un système de séparation ponctuel électromécanique d'aux moins deux éléments mécaniques séparables.

Selon l'invention, le système de séparation ponctuel électromécanique comprend un dispositif de maintien comportant une vis d'assemblage solidaire d'un premier desdits éléments mécaniques séparables, la vis d'assemblage étant maintenue par un écrou segmenté comprenant une pluralité de tronçons agencés entre la vis d'assemblage et une enveloppe externe, ladite enveloppe externe étant solidaire du second desdits éléments mécaniques séparables, ledit système comprenant également un générateur de force activable apte à générer une force de poussée dans la direction longitudinale permettant, en lien avec des formes coopérantes entre chacun desdits tronçons et l'enveloppe externe, d'engendrer un déplacement de chacun desdits tronçons de l'écrou segmenté dans une direction dite radiale, perpendiculaire à la direction longitudinale, depuis la vis d'assemblage vers l'enveloppe externe pour libérer la vis d'assemblage de l'écrou segmenté afin de séparer les deux éléments mécaniques séparables.

De plus, selon l'invention, le générateur de force comprend :
- un accumulateur mécanique d'énergie apte à générer la force de poussée, ledit accumulateur comprenant au moins une chambre étanche pourvue d'un colloïde, ledit colloïde étant formé d'une matrice poreuse et d'un liquide, la chambre étant apte à se déformer dans une direction dite longitudinale pour s'adapter au changement d'un état comprimé à un état décomprimé du colloïde, un état du colloïde dépendant d'une pression mécanique appliquée à la chambre, la déformation dans la direction longitudinale de la chambre générant la force de poussée ; et
- un élément d'actionnement activable, agencé sur la chambre et configuré pour :
   - soit appliquer une pression mécanique prédéterminée sur la chambre afin de maintenir le colloïde dans l'état comprimé,
   - soit, lors de son activation, ne pas appliquer la pression mécanique prédéterminée sur la chambre afin de permettre le changement de l'état comprimé à l'état décomprimé du colloïde.

Ainsi, grâce à l'invention, le changement d'un état comprimé à un état décomprimé du colloïde et la déformation qui en résulte de la chambre permettent au générateur de force de générer une force élevée sur des temps très courts. De plus, les éléments qui forment le générateur de force, tels que la chambre, le colloïde et l'élément d'actionnement activable, sont peu volumineux, ce qui rend le générateur de force compact et léger. Le système de séparation ponctuel électromécanique permet ainsi de remédier à au moins certains des inconvénients précités.

En outre, la source d'énergie du générateur de force reposant sur un changement réversible d'état du colloïde contenu dans la chambre déformable, le bon fonctionnement du système de force peut être testé avant son utilisation.

Avantageusement, le générateur de force est configuré pour amener le colloïde dans l'un ou l'autre des états suivants :
- l'état comprimé lorsque la chambre est soumise à une valeur de pression mécanique supérieure ou égale à une première pression seuil prédéterminée, l'intrusion d'au moins une partie du liquide dans les pores de la matrice poreuse générant l'état comprimé du colloïde ;
- l'état décomprimé lorsque la chambre est soumise à une valeur de pression inférieure ou égale à une seconde pression seuil prédéterminée, l'extrusion d'au moins une partie du liquide des pores de la matrice poreuse générant l'état décomprimé du colloïde,
la première pression seuil prédéterminée étant supérieure à la seconde pression seuil prédéterminée.

Dans le cadre de la présente invention, la chambre peut être réalisée de différentes manières.

Dans un premier mode de réalisation, la chambre déformable et étanche comprend un soufflet réalisé dans un des matériaux suivants : métal, élastomère.

Dans un second mode de réalisation, la chambre déformable et étanche est une chambre d'un vérin.

En outre, dans le cadre de la présente invention, on peut utiliser tout colloïde présentant les caractéristiques précitées.

Préférentiellement, la matrice poreuse du colloïde est constituée d'une des matières suivantes : une poudre constituée de grains, un gel constitué de billes.

En outre, de façon avantageuse, la surface de la matrice poreuse peut être recouverte d'une couche chimique lyophobe.

De plus, le liquide correspond à l'un des composés suivants : l'eau, un alliage de gallium, d'indium et d'étain.

Par ailleurs, dans un mode de réalisation particulier, le colloïde est contenu dans une pluralité d'enveloppes individuelles immergées dans un fluide contenu dans la chambre.

A titre d'illustration, ce type de dispositif, appelé système hétérogène lyophobe, est décrit dans les deux brevets européens suivants : EP 0 791 139 et EP 1 250 539.

De façon avantageuse, le dispositif de maintien comprend également un élément de support agencé entre d'une part le générateur de force et d'autre part la vis d'assemblage et la pluralité de tronçons de l'écrou segmenté, ledit élément de support étant configuré pour recevoir la force de poussée générée par le générateur de force et la transmettre à la vis d'assemblage et à la pluralité des tronçons engendrant à la fois le déplacement de la vis d'assemblage dans la direction longitudinale et le déplacement dans la direction radiale de chacun desdits tronçons.

De préférence, chacun desdits tronçons de l'écrou segmenté est pourvu d'une face radialement interne dont la forme est configurée pour coopérer avec la vis d'assemblage et d'une face radialement externe dont la forme est configurée pour coopérer avec l'enveloppe externe afin de participer à la transmission de la force de poussée puis à la libération de la vis d'assemblage.

Avantageusement, le dispositif de maintien comprend :
- l'élément de support de forme conique, pourvu d'une partie centrale plane et d'une partie annulaire ;
- la vis d'assemblage de section circulaire, agencée sur la partie plane de l'élément de support par une première face et solidaire du premier élément mécanique séparable par une seconde face, ladite seconde face étant opposée à la première face ;
- l'enveloppe externe de section circulaire supérieure à la section circulaire de la vis d'assemblage, l'enveloppe externe étant pourvue d'une extrémité coudée dans laquelle est agencée l'extrémité de la partie annulaire de l'élément de support ; et
- l'écrou segmenté formé de la pluralité de tronçons agencés entre la vis d'assemblage et l'enveloppe externe, qui s'appuie sur la partie annulaire de l'élément de support, l'écrou segmenté étant apte à se déplacer dans la direction radiale le long de la partie annulaire de l'élément de support d'une première position d'appui contre la vis d'assemblage vers une seconde position dans laquelle la vis d'assemblage est libérée.

Par ailleurs, le dispositif de maintien comprend également au moins deux ressorts, l'un des au moins deux ressorts étant agencé entre la chambre et la partie centrale plane de l'élément de support et l'autre des au moins deux ressorts étant agencé contre la partie inférieure de l'enveloppe externe.

La présente invention concerne également un dispositif de séparation électromécanique d'au moins deux éléments mécaniques séparables, comprenant une pluralité de systèmes de séparation ponctuels électromécanique tels que celui spécifié ci-dessus.

De plus, la présente invention concerne un lanceur comportant un dispositif de séparation électromécanique et/ou un système de séparation ponctuel électromécanique tels que ceux spécifiés ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en coupe longitudinale, d'un système de séparation ponctuel électromécanique selon un premier mode de réalisation ;
- les figures 2a et 2b sont des vues schématiques partielles, en coupe longitudinale, du système de séparation ponctuel électromécanique selon le premier mode de réalisation, respectivement pour deux états différents du colloïde ;
- les figures 3a et 3b sont des vues schématiques partielles, en coupe longitudinale, du système de séparation ponctuel électromécanique selon un second mode de réalisation, respectivement pour deux états différents du colloïde ; et
- les figures 4a à 4d sont des vues schématiques partielles, en coupe longitudinale, du système de séparation ponctuel électromécanique selon le premier mode de réalisation, respectivement dans différents états successifs lors de la séparation.

### DESCRIPTION DÉTAILLÉE

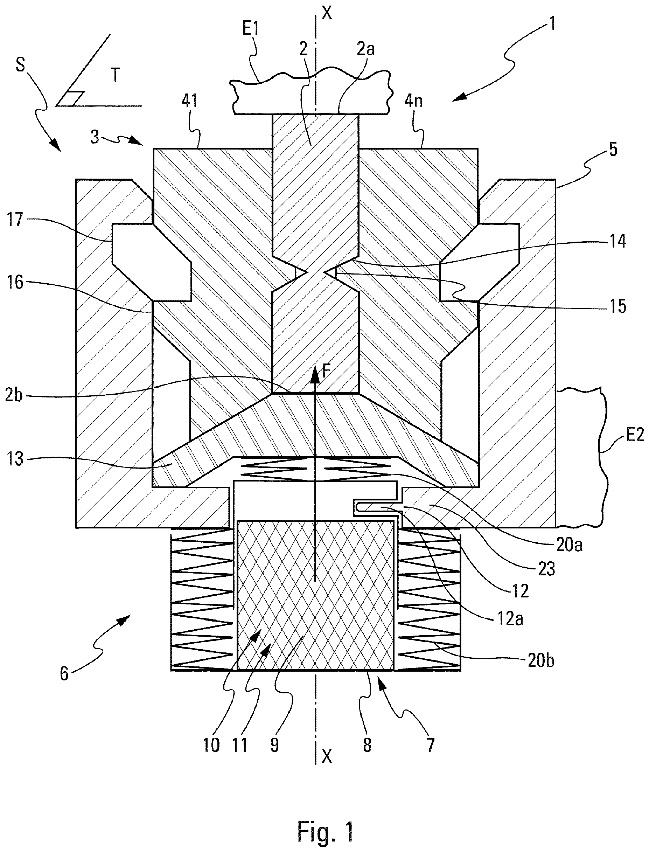

Le système de séparation ponctuel électromécanique S (ci-après « système S »), dont un mode de réalisation est représenté schématiquement sur la figure 1, est destiné à séparer au moins deux éléments mécaniques séparables E1 et E2 (représentés partiellement et très schématiquement sur la figure 1). Le terme ponctuel fait référence à la localisation du système S en une zone particulière entre les éléments séparables.

Le système S comprend un dispositif de maintien 1 et un générateur de force 6. Le dispositif de maintien 1 est configuré pour, d'une part, maintenir les deux éléments mécaniques séparables E1 et E2 avant leur séparation et, d'autre part, pour permettre leur séparation grâce à une force de poussée générée par le générateur de force 6.

Le dispositif de maintien 1 comporte une vis d'assemblage 2, de forme allongée selon une direction dite longitudinale, qui est solidaire d'un premier élément mécanique séparable E1. La vis d'assemblage 2 est maintenue par un écrou 3 agencé autour de cette dernière. Cet écrou 3 dit segmenté est formé d'une pluralité de tronçons 4n individuels agencés entre la vis d'assemblage 2 et une enveloppe externe 5. Cette enveloppe externe 5 est solidaire du second élément mécanique séparable E2.

Le générateur de force 6 est activable et il est apte à générer la force de poussée dans la direction longitudinale permettant, en lien avec des formes coopérantes entre chacun des tronçons 4n et l'enveloppe externe 5, comme précisé ci-dessous, d'engendrer un déplacement de chacun des tronçons 4n de l'écrou 3 segmenté dans une direction dite radiale, perpendiculaire à la direction longitudinale, depuis la vis d'assemblage 2 vers l'enveloppe externe 5. Ce déplacement dans la direction radiale a pour fonction de libérer la vis d'assemblage 2 de l'écrou 3 segmenté afin de séparer les deux éléments mécaniques séparables E1 et E2.

Pour ce faire, le générateur de force 6 comporte, comme représenté sur la figure 1 :
- un accumulateur 7 mécanique d'énergie apte à générer la force de poussée. L'accumulateur 7 comprend au moins une chambre 8 étanche pourvue d'un colloïde 9. Ce colloïde 9 est formé d'une matrice poreuse 10 et d'un liquide 11. De plus, le colloïde 9 présente des caractéristiques lui permettant de changer d'état, d'un état comprimé à un état décomprimé et inversement. La chambre 8 est apte à se déformer dans la direction longitudinale pour s'adapter à un changement du colloïde 9 de l'état comprimé à l'état décomprimé. L'état du colloïde 9 dépend d'une pression mécanique appliquée à la chambre 8. La déformation dans la direction longitudinale de la chambre 8 génère la force de poussée du générateur de force 6 ; et
- un élément d'actionnement 12 activable, agencé sur la chambre 8 et configuré pour :
   - soit appliquer une pression mécanique prédéterminée sur la chambre 8 afin de maintenir le colloïde 9 dans l'état comprimé,
   - soit, lors de son activation, ne pas appliquer la pression mécanique prédéterminée sur la chambre 8 afin de permettre le changement de l'état comprimé à l'état décomprimé du colloïde 9.

Dans la suite de la description, on utilise un repère associé au système S. Ce repère est défini selon un axe dit longitudinal X-X qui correspond à la direction longitudinale d'agencement de la vis d'assemblage 2 (par exemple l'axe de symétrie de cette dernière) et un plan transverse T perpendiculaire à l'axe longitudinal X-X et comprenant la direction radiale. L'adjectif « supérieur » est défini dans le sens (représenté par une flèche F sur la figure 1 notamment) de génération de la force de poussée dans la direction longitudinale. L'adjectif « inférieur » est défini dans le sens opposé au sens représenté par la flèche F, dans la direction longitudinale. La direction radiale, quant à elle, est définie radialement dans une section transversale à l'axe longitudinal X-X (correspondant au plan transverse T), à partir du centre représentant la position de l'axe longitudinal X-X dans le plan transverse T. Les adjectifs « interne » et « externe » sont définis par rapport à la direction radiale, respectivement vers l'axe longitudinal X-X et en sens opposé.

Comme représenté sur la figure 1, la vis d'assemblage 2 est de section circulaire et elle est agencée le long de l'axe longitudinal X-X. Une première face dite face supérieure 2a de la vis d'assemblage 2 est solidaire d'un des éléments mécaniques séparables E1. La vis d'assemblage 2 peut comprendre une encoche annulaire 14 sur sa surface périphérique dite surface radiale. La vis d'assemblage 2 repose, par une seconde face dite face inférieure 2b, opposée longitudinalement à la face supérieure 2a, sur un élément de support 13.

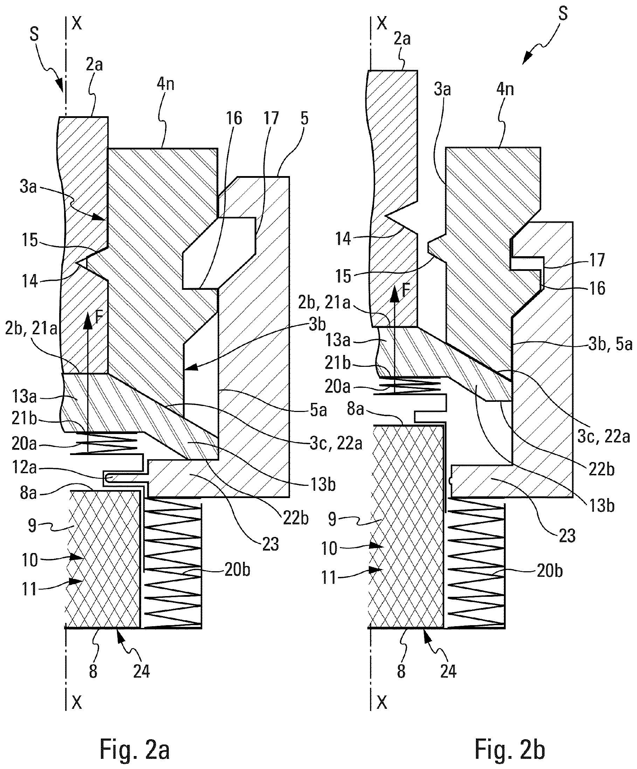

Comme représenté sur les figures 2a, 2b, 3a, 3b, 4a, 4b, 4c et 4d, l'élément de support 13 est de forme conique et comprend une partie centrale plane 13a et une partie annulaire 13b, agencée radialement vers l'extérieur par rapport à la partie centrale plane 13a. La partie centrale plane 13a et la partie annulaire 13b comprennent, chacune, une face supérieure 21a, 22a et une face inférieure 21b, 22b (figures 2a et 2b). La face inférieure 2b de la vis d'assemblage 2 repose sur la face supérieure 21a de la partie centrale plane 13a de l'élément de support 13 de surface identique. L'élément de support 13 est agencé dans le plan transverse T perpendiculaire à l'axe longitudinal X-X.

Le dispositif de maintien 1 comprend également l'écrou 3 segmenté agencé autour de la vis d'assemblage 2 et formé de la pluralité de tronçons 4n (n=1, ..., N, avec N un entier positif). Chacun des tronçons 4n est de forme allongée selon l'axe longitudinal X-X et représente un arc de cercle dans le plan transverse T entre la vis d'assemblage 2 et l'enveloppe externe 5. Chacun des tronçons 4n est apte à se déplacer dans la direction radiale sous l'impulsion d'une force de poussée générée par le générateur de force 6, comme précisé ci-après.

Comme représenté sur les figures 2a, 2b, 3a, 3b, 4a, 4b, 4c et 4d, chacun des tronçons 4n comprend une face inférieure 3c qui repose sur la face supérieure 22a de la partie annulaire 13b de l'élément de support 13. De plus, chacun des tronçons 4n est pourvu d'une face, dite face radialement interne 3a, en regard de la vis d'assemblage 2 et d'une face, dite face radialement externe 3b, opposée à la face radialement interne 3a. Dans un mode de réalisation particulier, la face radialement interne 3a de chacun des tronçons 4n de l'écrou 3 comprend un ergot 15 apte à coopérer avec un tronçon de l'encoche annulaire 14 pratiquée sur la surface radiale de la vis d'assemblage 2. La face radialement externe 3b de chacun des tronçons 4n de l'écrou 3 comprend une dent 16. La face radialement externe 3b de chacun des tronçons 4n est agencée en regard d'une face, dite face radialement interne 5a, de l'enveloppe externe 5.

L'enveloppe externe 5 est une pièce cylindrique agencée autour de la vis d'assemblage 2 et de l'écrou 3 segmenté. L'enveloppe externe 5 est solidaire de l'élément séparable mécanique E2. En outre, l'enveloppe externe 5 comprend une partie dite longitudinale agencée selon l'axe longitudinal X-X, dont la face radialement interne 5a est pourvue d'une gorge 17 apte à coopérer avec la dent 16 de chacun des tronçons 4n. L'enveloppe externe 5 comprend également une base 23 agencée dans le plan transverse T et liée à la partie longitudinale (avec laquelle elle forme un coude). Ce coude est configuré pour empêcher tout mouvement de l'élément de support 13 dans un sens opposé au sens de la force de poussée, représenté par la flèche F (figures 1, 2a et 2b).

Comme énoncé ci-dessus, le générateur de force 6 comporte l'accumulateur 7 mécanique d'énergie et l'élément d'actionnement 12 activable. L'accumulateur 7 mécanique d'énergie comprend la chambre 8 étanche. La chambre 8 est pourvue de faces rigides à l'exception d'une face supérieure 8a configurée pour permettre la déformation de la chambre 8 dans la direction longitudinale selon le sens de la flèche F.

La chambre 8 est pourvue du colloïde 9. Le colloïde est une structure hétérogène lyophobe qui représente une structure d'accumulation d'énergie. Le colloïde 9 est configuré pour passer de l'état comprimé à l'état décomprimé et inversement, en fonction de la pression mécanique qui est appliquée à la chambre 8. Le colloïde 9 est formé d'une matrice poreuse 10 et d'un liquide 11. Le liquide 11 présente un angle de mouillage supérieur à 90 degrés par rapport à la matrice poreuse 10. Le liquide 11 peut être de différents types.

Dans un mode de réalisation particulier, le liquide 11 peut être de l'eau. Dans un autre mode de réalisation, le liquide 11 est un alliage de gallium, d'indium et d'étain.

De préférence, la matrice poreuse 10 est constituée d'un matériau de type silicate. La matrice poreuse 10 est une poudre comprenant des grains dont le diamètre peut être de quelques micromètres. L'espace entre les grains forme un ensemble de pores de taille nanométrique. À titre d'exemple, la poudre constituant la matrice poreuse 10 est une zéolithe. Dans une variante de réalisation, la matrice poreuse 10 est un gel comprenant des billes dont le diamètre est également de quelques micromètres. À titre d'exemple, le gel constituant la matrice poreuse 10 peut être un gel de silice.

Dans un mode de réalisation préféré représenté sur les figures 2a à 4d, la matrice poreuse 10 est formée d'un matériau qui est lyophobe à l'égard du liquide 11.

Dans une variante, la propriété lyophobe de la matrice poreuse 10 est obtenue après un traitement chimique de type greffage du matériau qui la constitue. Plus particulièrement, la surface de la matrice poreuse 10 est recouverte d'une couche chimique lyophobe. La surface de la matrice poreuse 10 englobe la surface externe et la surface interne correspondant à la surface des pores.

Dans un mode de réalisation préféré (représenté sur les figures), le colloïde 9, formé de la matrice poreuse 10 et du liquide 11, est directement contenu dans la chambre 8.

Dans un autre mode de réalisation non représenté, le colloïde 9 est contenu dans une pluralité d'enveloppes individuelles. La pluralité d'enveloppes individuelles est immergée dans un fluide contenu dans la chambre 8. À titre d'exemple, ce fluide peut être de l'huile.

Par ailleurs, l'élément d'actionnement 12 du générateur de force 6 est configuré pour appliquer une pression mécanique prédéterminée sur le colloïde 9 par l'intermédiaire de la chambre 8 afin de le maintenir dans l'état comprimé.

Dans un premier mode de réalisation, illustré sur les figures 2a et 2b, la chambre 8 est un soufflet 24 réalisé en métal. Le soufflet 24 peut également être réalisé en élastomère. De plus, l'élément d'actionnement 12 activable est un doigt 12a électromécanique solidaire, par l'une de ses extrémités de la base 23 de l'enveloppe externe 5 et engagé dans un renfoncement d'une partie supérieure de la chambre 8, afin d'empêcher le déploiement du soufflet 24. Lors de son activation (réalisée de façon usuelle), par un ordre (de type électrique) généré automatiquement par une unité de commande (non représentée), le doigt 12a électromécanique se déplace dans la direction radiale de manière à ne plus appliquer de pression mécanique sur le colloïde 9 par l'intermédiaire de la chambre 8.

Dans une variante, l'activation de l'élément d'actionnement 12 peut générer un mouvement de rotation de ce dernier au lieu d'un déplacement dans la direction radiale. Dans une autre variante, l'élément d'actionnement 12 est une bille. L'activation de l'élément d'actionnement 12 engendre son dégagement d'un logement prévu sur la chambre 8.

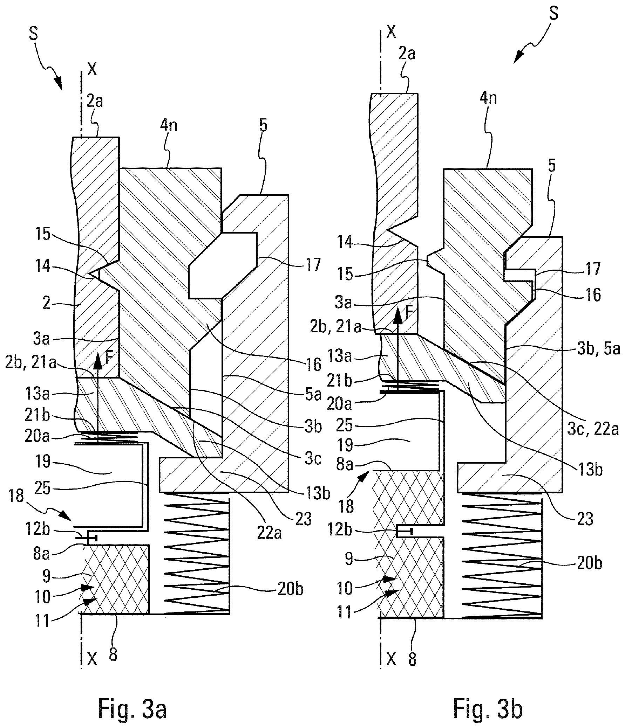

Dans un second mode de réalisation, illustré sur les figures 3a et 3b, le générateur de force 6 comporte un vérin 18. Le vérin 18 comprend, dans une partie inférieure, la chambre 8, et, dans une partie supérieure, un piston 19 apte à se déplacer dans la direction longitudinale. Le vérin comprend également un joint 25 agencé à l'extérieur du vérin 18 dans la direction radiale afin d'assurer l'étanchéité de la chambre 8. Dans ce second mode de réalisation, l'élément d'actionnement 12 activable correspond à une vanne 12b électromécanique agencée dans un renfoncement prévu dans la chambre 8 du vérin 18. La vanne 12b électromécanique est configurée pour appliquer une pression mécanique prédéterminée au colloïde 9 par l'intermédiaire de la chambre 8 afin de le maintenir dans l'état comprimé. Lors de son activation, la vanne 12b électromécanique s'ouvre de manière à ne plus appliquer ladite pression mécanique prédéterminée, permettant ainsi au colloïde 9 de passer dans l'état décomprimé dans la chambre 8 du vérin 18.

Par ailleurs, le système S est pourvu d'une pluralité de ressorts 20a, 20b. Un ressort 20a est agencé entre la face supérieure 8a de la chambre 8 ou du piston 19 et la face inférieure 21b de la partie centrale plane 13a de l'élément de support 13. Un autre ressort 20b peut être agencé contre la base 23 de l'enveloppe externe 5. Les ressorts 20a et 20b sont agencés afin de maintenir une stabilité relative des différents éléments du système S avant la séparation des éléments mécaniques. Les ressorts 20a et 20b ont également pour fonction d'atténuer les vibrations que peuvent subir le dispositif de maintien 1 et le générateur de force 6 avant activation.

Ainsi, le système S comprend l'accumulateur 7 mécanique d'énergie (ou ressort moléculaire) capable d'emmagasiner de très hautes densités d'énergie et de puissance. L'accumulateur 7 est également appelé ressort moléculaire. Le système S présente donc l'avantage d'être capable de transmettre de hauts niveaux d'efforts tout en restant léger et peu volumineux. De plus, le système S permet une séparation des éléments mécaniques séparables E1 et E2 dans des temps très courts. En effet, le temps de séparation de ces éléments par le système S est de l'ordre de quelques dizaines de millisecondes.

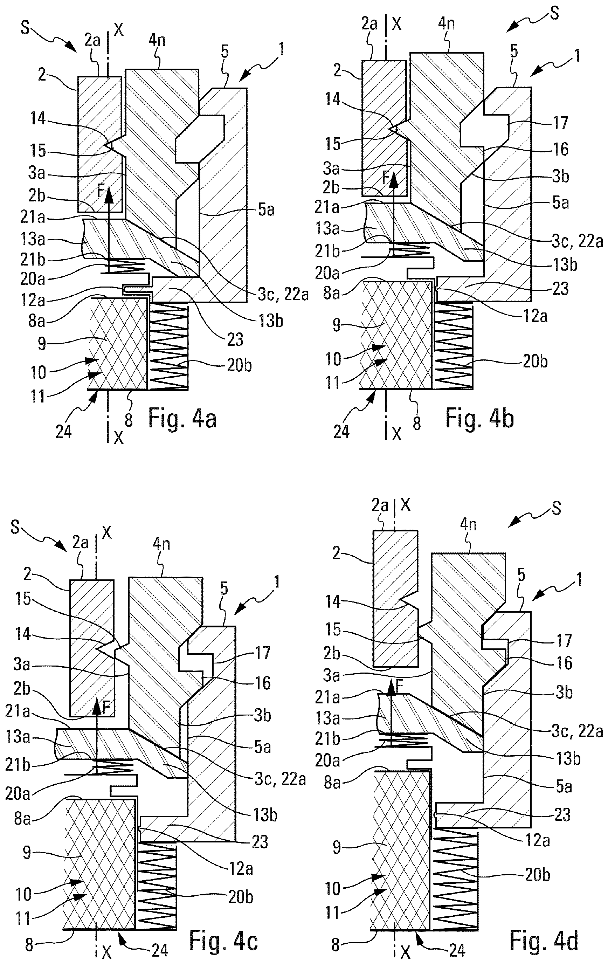

Le mode de fonctionnement du système de séparation ponctuel S, tel que décrit ci-dessus, est présenté ci-après en référence aux figures 4a à 4d qui illustrent le premier mode de réalisation. Le mode de fonctionnement du système S dans le second mode de réalisation est identique.

Au cours de la mise en place du générateur de force 6, avant son utilisation, le colloïde 9 est mis dans un état comprimé en appliquant à la chambre 8 une pression mécanique prédéterminée qui doit être supérieure ou égale à une pression d'intrusion. Cette pression d'intrusion est une fonction dépendant de la tension superficielle du liquide 11 à la température dans laquelle se trouve le système, de l'angle de mouillage du liquide 11 et de la conformation des pores de la matrice poreuse 10. Elle est donc déterminée par le choix du liquide 11 et le choix du matériau de la matrice poreuse 10. La pression d'intrusion peut être égale à environ 1110 bars si le liquide 11 du colloïde 9 est de l'eau.

L'application d'une pression mécanique prédéterminée supérieure ou égale à la pression d'intrusion sur la chambre 8 génère l'intrusion d'au moins une partie du liquide 11 dans les pores de la matrice poreuse 10. Lors de cette intrusion, la surface de séparation entre le liquide 11 et la matrice poreuse 10 solide augmente et avec elle l'énergie accumulée dans le colloïde 9. À titre d'exemple, le colloïde 9, dans un état comprimé, peut accumuler entre 5 et 500 Joules par centimètre cube.

Comme représenté sur la figure 4a, l'élément d'actionnement réalisé sous forme d'un doigt 12a dans cet exemple est mis en place afin de maintenir le colloïde 9 dans l'état comprimé en appliquant sur la chambre 8 la pression mécanique prédéterminée.

Avant l'utilisation du système S, la vis d'assemblage 2 est solidaire de l'écrou 3 segmenté par l'intermédiaire des ergots 15 agencés sur la face interne 3a de chacun des tronçons 4n. Ces ergots 15 sont placés dans l'encoche annulaire 14 pratiquée dans la vis d'assemblage 2. Chacun des tronçons 4n est également maintenu dans une position stable par l'intermédiaire de la dent 16 prévue sur la face radialement externe 3b de chacun des tronçons 4n. Chaque dent 16 est agencée en appui contre la face radialement interne 5a de l'enveloppe externe 5. De plus, le ressort 20a agencé entre l'élément de support 13 et la chambre 8 et le ressort 20b agencé contre la base 23 de l'enveloppe externe 5 participent à la stabilité du système S en absorbant notamment les mouvements vibratoires que le système S peut subir avant son utilisation.

Lors de l'activation automatique du générateur de force par un signal d'activation (électrique) usuel, l'élément d'actionnement 12 se désengage du renfoncement de la chambre 8. La pression mécanique prédéterminée n'est plus appliquée au colloïde 9 par l'intermédiaire de la chambre 8. Une partie du liquide 11 se trouvant dans les pores de la matrice poreuse 10 est rejetée par capillarité, hors de ces pores, en exerçant une pression d'extrusion. À titre d'exemple, la pression d'extrusion peut valoir 1000 bars si le liquide 11 du colloïde 9 est de l'eau. Elle peut représenter plus de 90 % de la pression d'intrusion. Lorsque la taille des pores est très petite, il y a très peu d'hystérésis. La pression d'intrusion et la pression d'extrusion présentent des valeurs proches. L'extrusion du liquide 11 modifie l'état du colloïde 9 de l'état comprimé vers l'état décomprimé en libérant l'énergie accumulée. Le volume du colloïde 9 dans l'état décomprimé augmente et provoque la déformation de la chambre 8 dans la direction longitudinale.

Comme représenté sur les figures 4b, 4c et 4d, la pression d'extrusion déforme la chambre 9 dans la direction longitudinale et génère ainsi une force de poussée transmise au dispositif de maintien 1. La force de poussée engendre un déplacement dans le sens de la flèche F de l'élément de support 13 ainsi que de la vis d'assemblage 2 et de chacun des tronçons 4n de l'écrou 3 qui reposent sur cet élément de support 13. Les tronçons 4n se déplacent par rapport à l'enveloppe externe 5 (figure 4b).

Lorsque la dent 16 de la face radialement externe 3b de chacun des tronçons 4n fait face à la gorge 17 de l'enveloppe externe 5, le déplacement dans la direction longitudinale de chacun des tronçons 4n se transforme en un déplacement dans la direction radiale. Le déplacement dans la direction radiale de chacun des tronçons 4n correspond à leur glissement sur la face supérieure 22a de la partie annulaire 13b de l'élément de support 13 d'une première position d'appui contre la vis d'assemblage 2 vers l'enveloppe externe 5. Le déplacement dans la direction radiale est également facilité par la coopération de la forme de la dent 16 avec la forme de la gorge 17. Cette coopération de formes permet le glissement de la dent 16 dans la gorge 17. Le déplacement dans la direction radiale de chacun des tronçons 4n, qui s'écartent ainsi de la vis d'assemblage 2, engendre un dégagement de l'ergot 15 de la face radialement interne 3a de l'encoche 14 de la vis d'assemblage 2. La vis d'assemblage 2 est alors libérée de l'écrou 3 (figure 4c). De plus, le générateur de force 6 fournit, par l'intermédiaire du déplacement de l'élément de support 13 une impulsion à la vis d'assemblage 2. Cette impulsion permet à la vis d'assemblage 2 de continuer à se déplacer après sa libération, dans le sens illustré par la flèche F, afin de permettre la séparation complète des éléments mécaniques E1 et E2.

Comme représenté sur la figure 4d, le déplacement dans la direction radiale de chacun des tronçons 4n se poursuit jusqu'à ce que la dent 16 de la face radialement externe 3b de chacun des tronçons 4n soit engagée dans la gorge 17 de l'enveloppe externe 5. Cet engagement permet de bloquer tout mouvement de chacun des tronçons 4n dans les directions longitudinale et radiale. La vis d'assemblage 2 continue de se déplacer avec une vitesse proportionnelle à la pression d'extrusion fournie par le colloïde 9 lors de son passage de l'état comprimé à l'état décomprimé.

Le système de séparation ponctuel électromécanique S, tel que décrit ci-dessus, peut faire partie d'un dispositif de séparation électromécanique. Ce dispositif de séparation électromécanique comprend une pluralité de M systèmes S, qui sont agencés à différents endroits entre les deux éléments mécaniques séparables E1 et E2, afin d'optimiser la séparation de ces deux éléments mécaniques E1 et E2. À titre d'exemple, le nombre M peut être compris entre 2 et 12.

Par ailleurs, ce dispositif de séparation et/ou le système S peuvent être utilisés dans de très nombreuses applications.

De manière non limitative, le dispositif de séparation et/ou le système S peuvent être utilisés pour participer à la séparation et au largage de bombes ou de tout autre objet d'un avion, par exemple via une trappe. Le dispositif de séparation et/ou le système S peuvent également être utilisés pour la séparation et le largage d'objets par un missile.

En outre, le dispositif de séparation et/ou le système S peuvent être utilisés dans le cadre d'une désolidarisation et d'un déploiement de divers éléments, tels qu'un panneau solaire, un radiateur ou une antenne, sur un satellite ou une sonde spatiale.

Dans une application particulière, le dispositif de séparation et/ou le système S sont intégrés dans un lanceur (spatial) comprenant, notamment, une pluralité d'étages propulsifs largables successifs et une charge utile (satellite artificiel ou sonde spatiale) qui peut être agencée sous une coiffe, la propulsion du lanceur étant assurée par les étages successifs. Le dispositif de séparation et/ou le système S peuvent être utilisés pour permettre la séparation et le largage d'un ou de plusieurs des étages propulsifs, lorsque ces derniers ne fournissent plus de propulsion au lanceur. En outre, un tel dispositif de séparation (et/ou système S) peut être agencé au niveau de la coiffe, pour permettre le largage de la coiffe et de la charge utile du lanceur.

## Revendications

1. Système de séparation ponctuel électromécanique d'au moins deux éléments mécaniques séparables, ledit système (S) comprenant un dispositif de maintien (1) comportant une vis d'assemblage (2) solidaire d'un premier (E1) desdits éléments mécaniques séparables (E1, E2), la vis d'assemblage (2) étant maintenue par un écrou (3) segmenté comprenant une pluralité de tronçons (4n) agencés entre la vis d'assemblage (2) et une enveloppe externe (5), ladite enveloppe externe (5) étant solidaire du second (E2) desdits éléments mécaniques séparables (E1, E2), ledit système (S) comprenant également un générateur de force (6) activable apte à générer une force de poussée (F) dans une direction (X-X) dite longitudinale permettant, en lien avec des formes coopérantes entre chacun desdits tronçons (4n) et l'enveloppe externe (5), d'engendrer un déplacement de chacun desdits tronçons (4n) de l'écrou (3) segmenté dans une direction dite radiale, perpendiculaire à la direction longitudinale, depuis la vis d'assemblage (2) vers l'enveloppe externe (5) pour libérer la vis d'assemblage (2) de l'écrou (3) segmenté afin de séparer les deux éléments mécaniques séparables (E1, E2),
**caractérisé en ce que** le générateur de force (6) comprend :
- un accumulateur (7) mécanique d'énergie apte à générer la force de poussée (F), ledit accumulateur (7) comprenant au moins une chambre (8) étanche pourvue d'un colloïde (9), ledit colloïde (9) étant formé d'une matrice poreuse (10) et d'un liquide (11), la chambre (8) étant apte à se déformer dans la direction longitudinale (X-X) pour s'adapter au changement d'un état comprimé à un état décomprimé du colloïde (9), un état du colloïde (9) dépendant d'une pression mécanique appliquée à la chambre (8), la déformation dans la direction longitudinale (X-X) de la chambre (8) générant la force de poussée (F) ; et
- un élément d'actionnement (12) activable, agencé sur la chambre (8) et configuré pour :
• soit appliquer une pression mécanique prédéterminée sur la chambre (8) afin de maintenir le colloïde (9) dans l'état comprimé,
• soit, lors de son activation, ne pas appliquer la pression mécanique prédéterminée sur la chambre (8) afin de permettre le changement de l'état comprimé à l'état décomprimé du colloïde (9).

2. Système selon la revendication 1,
**caractérisé en ce que** le générateur de force (6) est configuré pour amener le colloïde (9) dans l'un ou l'autre des états suivants :
- l'état comprimé lorsque la chambre (8) est soumise à une valeur de pression mécanique supérieure ou égale à une première pression seuil prédéterminée, l'intrusion d'au moins une partie du liquide (11) dans les pores de la matrice poreuse (10) générant l'état comprimé du colloïde (9) ;
- l'état décomprimé lorsque la chambre (8) est soumise à une valeur de pression inférieure ou égale à une seconde pression seuil prédéterminée, l'extrusion d'au moins une partie du liquide (11) des pores de la matrice poreuse (10) générant l'état décomprimé du colloïde (9),
la première pression seuil prédéterminée étant supérieure à la seconde pression seuil prédéterminée.

3. Système selon l'une des revendications 1 et 2,
**caractérisé en ce que** la chambre (8) déformable et étanche comprend un soufflet (24) réalisé dans un des matériaux suivants : métal, élastomère.

4. Système selon l'une des revendications 1 et 2,
**caractérisé en ce que** la chambre (8) déformable et étanche est une chambre (8) d'un vérin (18).

5. Système selon l'une quelconque des revendications précédentes, **caractérisé en ce que** la surface de la matrice poreuse (10) est recouverte d'une couche chimique lyophobe.

6. Système selon l'une quelconque des revendications précédentes, **caractérisé en ce que** le colloïde (9) est contenu dans une pluralité d'enveloppes individuelles, lesdites enveloppes individuelles étant immergées dans un fluide contenu dans la chambre (8).

7. Système selon l'une quelconque des revendications précédentes, **caractérisé en ce que** le dispositif de maintien (1) comprend également un élément de support (13) agencé entre d'une part le générateur de force (6) et d'autre part la vis d'assemblage (2) et la pluralité de tronçons (4n) de l'écrou (3) segmenté, ledit élément de support (13) étant configuré pour recevoir la force de poussée (F) générée par le générateur de force (6) et la transmettre à la vis d'assemblage (2) et à la pluralité des tronçons (4n) engendrant à la fois le déplacement de la vis d'assemblage (2) dans la direction longitudinale (X-X) et le déplacement dans la direction radiale de chacun desdits tronçons (4n).

8. Système selon l'une quelconque des revendications précédentes, **caractérisé en ce que** chacun desdits tronçons (4n) de l'écrou (3) segmenté est pourvu d'une face radialement interne (3a) dont la forme est configurée pour coopérer avec la vis d'assemblage (2) et d'une face radialement externe (3b) dont la forme est configurée pour coopérer avec l'enveloppe externe (5) afin de participer à la transmission de la force de poussée puis à la libération de la vis d'assemblage (2).

9. Système selon la revendication 7,
**caractérisé en ce que** le dispositif de maintien (1) comprend :
- l'élément de support (13) de forme conique, pourvu d'une partie centrale plane (13a) et d'une partie annulaire (13b) ;
- la vis d'assemblage (2) de section circulaire, agencée sur la partie centrale plane (13a) de l'élément de support (13) par une première face (2b) et solidaire du premier élément mécanique séparable (E1) par une seconde face (2a), ladite seconde face étant opposée à ladite première face (2b) ;
- l'enveloppe externe (5) de section circulaire supérieure à la section circulaire de la vis d'assemblage (2), l'enveloppe externe (5) étant pourvue d'une extrémité coudée (23) sur laquelle repose une extrémité de la partie annulaire (13b) de l'élément de support (13) ; et
- l'écrou (3) segmenté formé de la pluralité de tronçons (4n) agencés entre la vis d'assemblage (2) et l'enveloppe externe (5), qui s'appuie sur la partie annulaire (13b) de l'élément de support (13), l'écrou (3) segmenté étant apte à se déplacer dans la direction radiale le long de la partie annulaire (13b) de l'élément de support (13) d'une première position d'appui contre la vis d'assemblage (2) vers une seconde position dans laquelle la vis d'assemblage (2) est libérée.

10. Dispositif de séparation électromécanique d'au moins deux éléments mécaniques séparables, **caractérisé en ce qu'**il comprend une pluralité de systèmes (S) de séparation ponctuels électromécanique tels que celui spécifié sous l'une quelconque des revendications précédentes.

## Patentansprüche

1. Elektromechanisches punktuelles System zur Trennung von mindestens zwei trennbaren mechanischen Elementen, wobei das System (S) eine Haltevorrichtung (1) mit einer Verbindungsschraube (2) aufweist, die mit einem ersten (E1) der trennbaren mechanischen Elemente (E1, E2) fest verbunden ist, wobei die Verbindungsschraube (2) von einer segmentierten Mutter (3) gehalten wird, die eine Vielzahl von Abschnitten (4n) aufweist, die zwischen der Verbindungsschraube (2) und einer Außenhülle (5) angeordnet sind, wobei die Außenhülle (5) mit dem zweiten (E2) der trennbaren mechanischen Elemente (E1, E2) fest verbunden ist, wobei das System (S) ferner einen aktivierbaren Kraftgenerator (6) umfasst, der dazu geeignet ist, eine Schubkraft (F) in einer Längsrichtung (X-X) zu erzeugen, die es durch Formschluss zwischen jedem der Abschnitte (4n) und der Außenhülle (5) ermöglicht, eine Verlagerung jedes der Abschnitte (4n) der segmentierten Mutter (3) in einer radialen Richtung senkrecht zur Längsrichtung von der Verbindungsschraube (2) zur Außenhülle (5) hin zu erzeugen, um die Verbindungsschraube (2) von der segmentierten Mutter (3) zu lösen, um die beiden trennbaren mechanischen Elemente (E1, E2) zu trennen,
**dadurch gekennzeichnet, dass** der Kraftgenerator (6) enthält:
- einen mechanischen Energiespeicher (7), der dazu geeignet ist, die Schubkraft (F) zu erzeugen, wobei der Speicher (7) mindestens eine abgedichtete Kammer (8) enthält, die mit einem Kolloid (9) versehen ist, wobei das Kolloid (9) aus einer porösen Matrix (10) und einer Flüssigkeit (11) gebildet ist, wobei die Kammer (8) dazu geeignet ist, sich in der Längsrichtung (X-X) zu verformen, um sich an den Wechsel von einem komprimierten Zustand zu einem dekomprimierten Zustand des Kolloids (9) anzupassen, wobei ein Zustand des Kolloids (9) von einem auf die Kammer (8) ausgeübten mechanischen Druck abhängt, wobei die Verformung in der Längsrichtung (X-X) der Kammer (8) die Schubkraft (F) erzeugt; und
- ein aktivierbares Betätigungselement (12), das an der Kammer (8) angeordnet und dazu ausgelegt ist,
• entweder einen vorbestimmten mechanischen Druck auf die Kammer (8) auszuüben, um das Kolloid (9) im komprimierten Zustand zu halten,
• oder bei seiner Aktivierung nicht den vorbestimmten mechanischen Druck auf die Kammer (8) auszuüben, um den Wechsel vom komprimierten Zustand in den dekomprimierten Zustand des Kolloids (9) zu ermöglichen.

2. System nach Anspruch 1, **dadurch gekennzeichnet, dass** der Kraftgenerator (6) dazu ausgelegt ist, das Kolloid (9) in den einen oder anderen der folgenden Zustände zu bringen:
- den komprimierten Zustand, wenn die Kammer (8) einem mechanischen Druckwert ausgesetzt ist, der größer oder gleich einem ersten vorbestimmten Schwellendruck ist, wobei das Eindringen von mindestens einem Teil der Flüssigkeit (11) in die Poren der porösen Matrix (10) den komprimierten Zustand des Kolloids (9) bewirkt;
- den dekomprimierten Zustand, wenn die Kammer (8) einem Druckwert ausgesetzt ist, der kleiner oder gleich einem zweiten vorbestimmten Schwellendruck ist, wobei das Austreten von mindestens einem Teil der Flüssigkeit (11) aus den Poren der porösen Matrix (10) den dekomprimierten Zustand des Kolloids (9) bewirkt,
wobei der erste vorbestimmte Schwellendruck höher als der zweite vorbestimmte Schwellendruck ist.

3. System nach einem der Ansprüche 1 und 2, **dadurch gekennzeichnet, dass** die verformbare, abgedichtete Kammer (8) einen Faltenbalg (24) aus einem der folgenden Materialien enthält: Metall, Elastomer.

4. System nach einem der Ansprüche 1 und 2, **dadurch gekennzeichnet, dass** es sich bei der verformbaren, abgedichteten Kammer (8) um eine Kammer (8) eines Kraftzylinders (18) handelt.

5. System nach einem der vorangehenden Ansprüche, **dadurch gekennzeichnet, dass**
die Oberfläche der porösen Matrix (10) mit einer lyophoben chemischen Schicht bedeckt ist.

6. System nach einem der vorangehenden Ansprüche, **dadurch gekennzeichnet, dass**
das Kolloid (9) in einer Vielzahl von einzelnen Hüllen enthalten ist, wobei die einzelnen Hüllen in ein in der Kammer (8) enthaltenes Fluid eingetaucht sind.

7. System nach einem der vorangehenden Ansprüche, **dadurch gekennzeichnet, dass**
die Haltevorrichtung (1) ferner ein Stützelement (13) umfasst, das zwischen einerseits dem Kraftgenerator (6) und andererseits der Verbindungsschraube (2) und der Mehrzahl von Abschnitten (4n) der segmentierten Mutter (3) angeordnet ist, wobei das Stützelement (13) dazu ausgelegt ist, die von dem Kraftgenerator (6) erzeugte Schubkraft (F) aufzunehmen und sie auf die Verbindungsschraube (2) und auf die Vielzahl von Abschnitten (4n) zu übertragen, wodurch sowohl die Verlagerung der Verbindungsschraube (2) in Längsrichtung (X-X) als auch die Verlagerung jedes der Abschnitte (4n) in radialer Richtung hervorgerufen wird.

8. System nach einem der vorangehenden Ansprüche, **dadurch gekennzeichnet, dass**
jeder der Abschnitte (4n) der segmentierten Mutter (3) mit einer radial inneren Fläche (3a), deren Form so gestaltet ist, dass sie mit der Verbindungsschraube (2) zusammenwirkt, und mit einer radial äußeren Fläche (3b) versehen ist, deren Form so gestaltet ist, dass sie mit der Außenhülle (5) zusammenwirkt, um an der Übertragung der Schubkraft und dann am Lösen der Verbindungsschraube (2) mitzuwirken.

9. System nach Anspruch 7, **dadurch gekennzeichnet, dass** die Haltevorrichtung (1) enthält:
- das Stützelement (13) mit konischer Form, das mit einem flachen Mittelteil (13a) und einem ringförmigen Teil (13b) versehen ist;
- die Verbindungsschraube (2) mit kreisförmigem Querschnitt, die mit einer ersten Fläche (2b) auf dem flachen Mittelteil (13a) des Stützelements (13) angeordnet ist und mit einer zweiten Fläche (2a) mit dem ersten mechanischen trennbaren Element (E1) fest verbunden ist, wobei die zweite Fläche der ersten Fläche (2b) gegenüberliegt;
- die Außenhülle (5) mit einen kreisförmigen Querschnitt, der größer ist als der kreisförmige Querschnitt der Verbindungsschraube (2), wobei die Außenhülle (5) mit einem abgewinkelten Ende (23) versehen ist, auf dem ein Ende des ringförmigen Teils (13b) des Stützelements (13) aufliegt; und
- die segmentierte Mutter (3), die aus der Vielzahl von zwischen der Verbindungsschraube (2) und der Außenhülle (5) angeordneten Abschnitten (4n) gebildet ist und die sich auf dem ringförmigen Teil (13b) des Stützelements (13) abstützt, wobei sich die segmentierte Mutter (3) in radialer Richtung entlang des ringförmigen Teils (13b) des Stützelements (13) aus einer ersten Position zum Abstützen an der Verbindungsschraube (2) in eine zweite Position verlagern kann, in der die Verbindungsschraube (2) gelöst ist.

10. Elektromechanische Vorrichtung zur Trennung von mindestens zwei trennbaren mechanischen Elementen, **dadurch gekennzeichnet, dass** sie eine Vielzahl von elektromechanischen punktuellen Trennsystemen (S) nach einem der vorangehenden Ansprüche enthält.

## Claims

1. A system for point electromechanically separating at least two separable mechanical elements, said system (S) comprising a holding device (1) including a connecting screw (2) integral with a first (E1) of said separable mechanical elements (E1, E2), the connecting screw (2) being held by a segmented nut (3) comprising a plurality of segments (4n) arranged between the connecting screw (2) and an outer shell (5), said outer shell (5) being integral with the second (E2) of said separable mechanical elements (E1, E2), said system (S) also comprising an activatable force generator (6) able to generate a thrust force (F) in a so-called longitudinal direction (X-X) for, in connection with cooperating shapes between each of said segments (4n) and the outer shell (5), yielding a movement of each of said segments (4n) of the segmented nut (3) in a so-called radial direction, perpendicular to the longitudinal direction, from the connecting screw (2) to the outer shell (5) to release the connecting screw (2) from the segmented nut (3) in order to separate both separable mechanical elements (E1, E2),
**characterised in that** the force generator (6) comprises:
- a mechanical energy accumulator (7) able to generate the thrust force (F), said accumulator (7) comprising at least one sealed chamber (8) provided with a colloid (9), said colloid (9) being formed by a porous matrix (10) and by a liquid (11), the chamber (8) being able to deform in the longitudinal direction (X-X) to accommodate change from a compressed state to a decompressed state of the colloid (9), a state of the colloid (9) depending on a mechanical pressure applied to the chamber (8), deformation in the longitudinal direction (X-X) of the chamber (8) generating the thrust force (F); and
- an activatable actuating element (12), arranged on the chamber (8) and configured:
• either to apply a predetermined mechanical pressure to the chamber (8) in order to hold the colloid (9) in the compressed state,
• or, upon being activated, not to apply the predetermined mechanical pressure to the chamber (8) in order to enable change from the compressed state to the decompressed state of the colloid (9).

2. The system according to claim 1,
**characterised in that** the force generator (6) is configured to bring the colloid (9) in either of the following states:
- the compressed state when the chamber (8) is subjected to a mechanical pressure value greater than or equal to a first predetermined threshold pressure, intruding at least part of the liquid (11) into the pores of the porous matrix (10) producing the compressed state of the colloid (9);
- the decompressed state when the chamber (8) is subjected to a pressure value lower than or equal to a second predetermined threshold pressure, extruding at least part of the liquid (11) from the pores of the porous matrix (10) producing the compressed state of the colloid (9),
the first predetermined threshold pressure being greater than the second predetermined threshold pressure.

3. The system according to one of claims 1 to 2,
**characterised in that** the deformable sealed chamber (8) comprises a bellows (24) made of one of the following materials: metal, elastomer.

4. The system according to one of claims 1 to 2,
**characterised in that** the deformable sealed chamber (8) is a chamber (8) of a jack (18).

5. The system according to any of the previous claims,
**characterised in that** the surface of the porous matrix (10) is covered with a lyophobic chemical layer.

6. The system according to any of the previous claims, **characterised in that** the colloid (9) is contained in a plurality of individual shells, said individual shells being dipped in a fluid contained in the chamber (8).

7. The system according to any of the previous claims, **characterised in that** the holding device (1) also comprises a supporting element (13) arranged between on the one hand the force generator (6) and on the other hand the connecting screw (2) and the plurality of segments (4n) of the segmented nut (3), said supporting element (13) being configured to receive the thrust force (F) generated by the force generator (6) and transmit it to the connecting screw (2) and to the plurality of segments (4n) yielding both movement of the connecting screw (2) in the longitudinal direction (X-X) and movement in the radial direction of each of said segments (4n).

8. The system according to any of the previous claims,
**characterised in that** each of said segments (4n) of the segmented nut (3) is provided with a radially inner face (3a) the shape of which is configured to cooperate with the connecting screw (2) and with a radially outer face (3b) the shape of which is configured to cooperate with the outer shell (5) in order to take part in transmitting the thrust force and then releasing the connecting screw (2).

9. The system according to claim 7,
**characterised in that** the holding device (1) comprises:
- the conical-shaped supporting element (13), provided with a planar central part (13a) and with an annular part (13b);
- the circular cross-section connecting screw (2), arranged on the planar central part (13a) of the supporting element (13) by a first face (2b) and integral with the first separable mechanical element (E1) by a second face (2a), said second face being opposite to said first face (2b);
- the outer shell (5) with a circular cross-section area greater than the circular cross-section area of the connecting screw (2), the outer shell (5) being provided with a bent end (23) on which an end of the annular part (13b) of the supporting element (13) rests; and
- the segmented nut (3) formed by the plurality of segments (4n) arranged between the connecting screw (2) and the outer shell (5), which bears against the annular part (13b) of the supporting element (13), the segmented nut (3) being able to move in the radial direction along the annular part (13b) of the supporting element (13) from a first position bearing against the connecting screw (2) to a second position in which the connecting screw (2) is released.

10. A device for electromechanically separating at least two separable mechanical elements,
**characterised in that** it comprises a plurality of point electromechanical separating systems (S) such as the one specified according to any of the previous claims.
